(19) **Europäisches Patentamt / European Patent Office / Office européen des brevets**

(11) **EP 3 286 349 B1**

(12) **FASCICULE DE BREVET EUROPEEN**

(45) Date de publication et mention de la délivrance du brevet:
**21.08.2024 Bulletin 2024/34**

(21) Numéro de dépôt: **16720569.9**

(22) Date de dépôt: **25.04.2016**

(51) Classification Internationale des Brevets (IPC):
**C22C 38/08** (2006.01)   **C22C 38/12** (2006.01)
**C22C 38/10** (2006.01)   **C22C 38/00** (2006.01)
**C22C 38/06** (2006.01)   **C22C 38/02** (2006.01)
**C22C 38/18** (2006.01)   **C22C 38/16** (2006.01)
**C22C 38/14** (2006.01)   **C21D 6/00** (2006.01)
**C21D 6/02** (2006.01)   **C21D 7/06** (2006.01)
**C21D 8/00** (2006.01)   **C21D 8/02** (2006.01)
**C21D 9/00** (2006.01)   **C21D 9/30** (2006.01)
**C21D 9/46** (2006.01)   **C22B 9/18** (2006.01)
**C22B 9/20** (2006.01)   **C22C 1/02** (2006.01)
**C22C 30/00** (2006.01)

(52) Classification Coopérative des Brevets (CPC):
**C21D 9/0068; C21D 6/001; C21D 6/005;
C21D 6/007; C21D 6/008; C21D 6/02; C21D 7/06;
C21D 8/005; C21D 8/0205; C21D 8/021;
C21D 8/0226; C21D 8/0236; C21D 8/0247;
C21D 8/0278; C21D 9/00;** (Cont.)

(86) Numéro de dépôt international:
**PCT/IB2016/052331**

(87) Numéro de publication internationale:
**WO 2016/170519 (27.10.2016 Gazette 2016/43)**

(54) **ACIER, PRODUIT RÉALISÉ EN CET ACIER, ET SON PROCÉDÉ DE FABRICATION**

STAHL, PRODUKT AUS DEM STAHL UND VERFAHREN ZUR HERSTELLUNG

STEEL, PRODUCT MADE OF THAT STEEL AND METHOD TO OBTAIN THE STEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.04.2015 PCT/IB2015/052975**

(43) Date de publication de la demande:
**28.02.2018 Bulletin 2018/09**

(73) Titulaire: **Aperam**
**1882 Luxembourg (LU)**

(72) Inventeurs:
• **PERRIN GUERIN, Valérie**
**58160 Imphy (FR)**
• **PINTON, Gilles**
**58160 Imphy (FR)**
• **BORDAS, Angéline**
**58160 Imphy (FR)**
• **VALLADE, Christian**
**58160 Imphy (FR)**

(74) Mandataire: **Lavoix**
**2, place d'Estienne d'Orves**
**75441 Paris Cedex 09 (FR)**

(56) Documents cités:
**EP-B1- 2 180 073        WO-A1-02/40722
JP-A- 2007 186 780      JP-A- 2008 088 540
JP-A- S5 214 518**

(52) Classification Coopérative des Brevets (CPC):
(Cont.)
**C21D 9/30; C21D 9/46; C22B 9/18; C22B 9/20;
C22C 1/02; C22C 30/00; C22C 38/001;
C22C 38/002; C22C 38/004; C22C 38/02;
C22C 38/04; C22C 38/06; C22C 38/08;
C22C 38/105; C22C 38/12; C22C 38/14;
C22C 38/16; C22C 38/18; C22C 38/42;
C22C 38/44; C22C 38/50; C22C 38/52;
C22C 38/54;** C21D 2211/004; C21D 2211/008;
Y02P 10/20

**Description**

L'invention concerne le domaine des aciers dits « maraging », utilisés notamment pour des applications nécessitant une ou plusieurs des propriétés suivantes : excellentes propriétés mécaniques (très bonne tenue en fatigue, haute limite élastique et résistance à la rupture élevée), simplicité de traitement thermique et stabilité dimensionnelle, facilité de soudage et bonne aptitude au formage.

Ces aciers maraging se caractérisent par une structure martensitique, pouvant être vieillie, de façon à obtenir, à l'issue d'un vieillissement de l'acier, un durcissement par précipitation de phases intermétalliques favorables à l'obtention de propriétés mécaniques élevées.

On connaît classiquement des aciers maraging, de type M 250, de composition typique (exprimée en pourcentages pondéraux, comme le seront toutes les compositions données par la suite) Ni = 18%, Co = 9%, Ti = 0,45% (nuance dite X2NiCoMo18-9-5), le reste étant généralement du fer et des impuretés résultant de l'élaboration. Ils sont utilisés pour réaliser, notamment, des pièces à hautes propriétés, aptes à être utilisées aussi bien comme pièces massives (arbres de moteurs, pales de centrifugeuse...) que comme pièces de précision à performances élevées : ressorts pour l'horlogerie, lames pour fleurets, éléments de courroies de transmission automatique de type CVT (Continuous Variable Transmission) pour, notamment, des automobiles ou des véhicules en général, ou des machines-outils ou autres machines tournantes... Dans le cas d'applications en fines épaisseurs où la pièce est sollicitée en fatigue, il est habituel de procéder, en plus du vieillissement, à un traitement superficiel de durcissement de la pièce par nitruration, carbonitruration, grenaillage, cémentation...

On connaît aussi, par le document EP-B1-1 339 880, des aciers maraging dont la composition est: Ni = 12 à 24,5% ; Mo = 2,5% ; Co = 4,17% ; Al $\leq$ 0,15% ; Ti $\leq$ 0,1% ; N $\leq$ 30 ppm ; Si $\leq$ 0,1% ; Mn $\leq$ 0,1% ; C $\leq$ 50 ppm ; S $\leq$ 10 ppm ; P $\leq$ 50 ppm ; H $\leq$ 3 ppm ; a $\leq$ 10 ppm ; le reste étant du Fe et des impuretés résultant de l'élaboration, avec Ni + Mo compris entre 20 et 27% ; Co% x Mo% compris entre 50 et 200 ; Ti% x N% $\leq$ 2.10$^{-4}$, qui sont produits par des méthodes incluant des traitements de refusion sous vide de type VIM (Vacuum Induction Melting) et/ou VAR (Vacuum Argon Remelting), éventuellement couplées à un traitement par refusion sous laitier électroconducteur ESR (ElectroSlag Remelting). Ces aciers sont ensuite transformés à chaud et à froid pour obtenir des bandes de faible épaisseur (1 mm ou moins par exemple). Après mise en forme de la pièce, on procède à un traitement de durcissement par précipitation qui confère à la pièce ses propriétés mécaniques à coeur ; un traitement de surface ultérieur pourra conférer à la pièce des propriétés accrues en surface concernant la sollicitation en fatigue, la friction statique, le frottement dynamique...

Par rapport à des aciers maraging précédemment connus contenant environ 18% de Ni, 9% de Co, 5% de Mo, 0,5% de Ti, et un peu d'Al, ces aciers de EP-B1-1 339 880 se distinguent par une tenue en fatigue supérieure, associée à une propreté inclusionnaire contrôlée et une résistance mécanique plus élevée, supérieure à 2000 MPa (à l'état vieilli). De manière plus détaillée : les propriétés mécaniques sur produit laminé à froid visées sont Ar > 2.5%, $Rp_{0.2}$ < 1140 MPa, Rm < 1480 MPa ; sur état vieilli, $Rp_{0.2}$ > 1770 MPa, Rm > 1800 MPa ; enfin sur état nitruré les propriétés visées sont Ar > 1% ; Rm> 1930 MPA..

On connaît également par le document EP-B1-2 180 073 des aciers maraging à hautes tenue en fatigue et résistance à la traction destinés à des courroies CVT, de composition : C $\leq$ 100 ppm ; Si $\leq$ 0,1% ; Mn $\leq$ 0,1% ; P $\leq$ 0,01% ; S $\leq$ 50 ppm ; Ni = 17 - 22% ; Cr = 0,1-4,0% ; Mo = 3,0-7,0% ; Co = 10,0-20,0% ; Ti $\leq$ 0,1% ; Al $\leq$ 0,05% ; N $\leq$ 300 ppm ; O $\leq$ 50 ppm ; 0 < B $\leq$ 0,01% ; une présence optionnelle de jusqu'à 0,01% de Ca, jusqu'à 0,005% de Mg, jusqu'à 0,01% de Zr, le reste étant du Fe et des impuretés, avec Co/3 + Mo + 4Al compris entre 8,0 et 15,0%. De préférence les traitements thermiques et thermomécaniques subis leur confèrent un grain très fin, de ASTM 10 ou plus. Les documents WO 02/40722 A1; JP 2008 088540 A et JP 2007 186780 A portent aussi sur des aciers maraging.

Le but de l'invention est de proposer un nouveau type d'aciers maraging qui présente de meilleures propriétés mécaniques que, notamment, ceux que l'on vient de décrire. Ce nouveau type d'aciers aurait des propriétés optimisées pour diverses applications. Une résistance à la traction et/ou une résistance à la fatigue améliorées seraient des propriétés avantageuses à rechercher, ainsi qu'une capacité à former, lors d'un traitement de surface, une couche nitrurée, carbonitrurée, cémentée, grenaillée ou autres, capable d'introduire en surface des contraintes résiduelles permettant de retarder la fissuration en sollicitation cyclique qui serait due à une mise en compression des couches surfaciques. L'effet des traitements de surface peut être aussi évalué au travers de la dureté conférée au produit en surface.

A cet effet, l'invention a pour objet un acier, un produit en acier, une tôle ou bande laminée à froid, un produit en acier avec traitement superficiel, un arbre de turbine ou pièce de transmission et une courroie de transmission suivant les revendications.

Comme on l'aura compris, l'invention consiste à combiner une composition d'acier maraging déterminée, procurant une martensite dite « douce » du fait de la faible teneur en carbone de l'acier, avec une population d'inclusions non-métalliques (oxydes, sulfures, nitrures essentiellement) répondant à des critères précis de nombre et, de préférence, de composition, cette population pouvant être obtenue après une élaboration soignée du métal liquide grâce à une combinaison de différents procédés d'élaboration et de conditions maîtrisées par les opérateurs.

L'invention sera mieux comprise à la lecture de la description qui suit, donnée en référence aux figures annexées suivantes :

- La figure 1 qui montre les résultats d'essais en fatigue effectués sur un échantillon de référence et sur trois échantillons d'un acier selon l'invention ;
- La figure 2 qui montre une caractérisation des couches nitrurées par leurs contraintes résiduelles en surface, effectuée sur deux échantillons de référence et sur trois échantillons d'un acier selon l'invention ;
- La figure 3 qui montre une caractérisation des couches nitrurées par leurs niveaux de micro-dureté en surface, effectuée sur deux échantillons de référence et sur trois échantillons d'un acier selon l'invention.

La composition de l'acier (en pourcentages pondéraux) est motivée par les considérations suivantes.

La teneur en Ni est comprise entre 10,0 et 24,5%, de préférence entre 12,0 et 24,5%. C'est à cette condition que :

- d'une part on obtient par les traitements thermiques habituels une structure martensitique ; une teneur en Ni de plus de 24,5%, combinée aux teneurs des autres éléments, ne permettrait pas d'obtenir une telle structure ;
- d'autre part on obtient après le durcissement par précipitation des propriétés de ductilité, dilatation, limite élastique, ténacité K1C particulièrement favorables pour les applications envisagées ; une teneur en Ni minimale de 10,0%, associée à des proportions définies de Co, Mo et autres éléments métalliques, est adaptée à cette obtention. Une teneur en Ni minimale de 12,0% est encore préférée pour obtenir cet effet de façon satisfaisante.

La teneur en Mo est comprise entre 1,0 et 12,0%. Cet élément permet le durcissement structural en formant, lors du vieillissement, des intermétalliques $Fe_2Mo$, $MoNi_3$ et autres, fins et dispersés. Optimalement, la teneur en Mo est de 2,5 à 9,0% pour obtenir à la fois un effet très significatif du Mo et des intermétalliques de taille optimale pour assurer l'homogénéité des propriétés mécaniques.

Mo intervient aussi dans la constitution et les propriétés des couches nitrurées qui comportent des précipités fins et dispersés de natures différentes selon les conditions de la nitruration (précipités de types $Mo_2N$, $Fe_xMo_yN_z$ ...).

La teneur en Ni + Mo est à ajuster en fonction des températures de transformation martensitique Ms (début de transformation), Mf (fin de transformation) nécessaires à l'obtention et au maintien d'une structure martensitique et d'une stabilité dimensionnelle, compte tenu des applications envisagées pour les futurs produits et des températures d'usage qu'elles imposeront. Par exemple, pour une application à basse température d'utilisation, on vise une température Ms supérieure à 100°C, et une somme Ni + Mo de 18,0 à 27,0% est favorable de ce point de vue. Les Ms sont calculées selon la formule :

$$Ms = - 29\ Ni\% + Mo\% + 890°C,$$

pour Co = 9-16% et pour des teneurs en Cr, Al et Ti très faibles, ces éléments ayant une influence marquée sur Ms, cette température pouvant, de toute façon, être évaluée par l'expérience.

Mf s'en déduit aisément par l'expérience.

La teneur en Co est comprise entre 1,0 et 25,0%. Cet élément stabilise la structure martensitique, élève les températures de solidus et participe de manière indirecte au durcissement en favorisant la précipitation des intermétalliques. Si on en met trop, les propriétés de l'acier et les conditions de sa mise en oeuvre peuvent être significativement modifiées et l'addition devient coûteuse.

Si Co est relativement bas, il faut compléter son action par l'addition d'un ou plusieurs des éléments durcissants Si, Mn, Cu, W, V, Nb, Zr, C.

La conséquence de cette exigence sur la nécessité d'avoir des quantités suffisantes de Co est que la somme Mo + Co + Si + Mn + Cu + W + V + Nb + Zr + Ta + Cr + C est comprise entre 20,0 et 29,0%. Cela implique que si la teneur en Co est de moins de 8%, on devra toujours ajouter au moins un élément choisi parmi Si, Mn, Cu, W, V, Nb, Zr, Ta, Cr, C (dans les limites prescrites par ailleurs), compte tenu du fait que Mo n'est jamais supérieur à 12%.

La limite inférieure de 20,0% est justifiée par l'obtention d'un effet durcissant suffisant. Au-delà de 29,0%, les propriétés magnétiques et les conditions de mise en oeuvre du matériau s'en voient significativement modifiées. De préférence, la limite inférieure est de 22,0%, mieux 22,5%, pour obtenir les propriétés maximales à l'issue du vieillissement et les valeurs d'usage requises par les applications les plus exigeantes envisagées.

Les teneurs en Ni, Co, Mo sont également dépendantes les unes des autres, en ce que :

- le Ni améliore la ductilité (à basses températures notamment), et permet de contrôler la dilatation et le module d'élasticité ; il a aussi un effet sur la ténacité et le rapport Re/Rm ; ses teneurs sont encadrées : en borne inférieure pour bénéficier des propriétés favorables que l'on a citées (en général dès 5% pour les alliages), et en borne supérieure pour ne pas gêner la transformation martensitique du fait de son caractère gammagène ; à cet effet, les influences de Co et Mo sont aussi à prendre en compte ;

-   le Mo est ajouté à des fins de durcissement structural par la précipitation d'intermétalliques ; et, afin de viser les propriétés en rupture des nuances maraging, il convient d'avoir une structure martensitique à vieillissement ; le Mo intervient dans ce durcissement comme on l'a dit plus haut (dès 1%) ; il ne trouve ses limites que dans la formation de phases fragilisantes (phases de Laves, $\sigma$, $\mu$, $\theta$, $\delta$...), pouvant être associées aux ségrégations locales la limite supérieure est de 12% ; le Mo participe aussi à la nitruration des surfaces par son affinité avec l'azote (dès quelques %). Ainsi afin d'avoir une structure martensitique vieillissante, les éléments Co et Mo agissent conjointement quant à la précipitation de phases durcissantes, mais de manière dissociée quant à la stabilisation des structures ferritiques ; afin d'unifier ces tendances, une formule est proposée afin de garantir une température Ms de plus de 100°C , selon :

Co + Mo $\geq$ 20,0 %, de préférence $\geq$ 21,0%, mieux $\geq$ 22,0% ;
et :
Ni + Co + Mo $\geq$ 29% ; de préférence $\geq$ 41,0%.

La teneur en Al est comprise entre des traces et 4,0%. Al n'est pas obligatoirement ajouté. On peut réduire sa présence au niveau de celle d'un élément résiduel, résultant de la quantité qu'il a été, éventuellement, nécessaire d'ajouter pour la désoxydation initiale du métal liquide au début de l'élaboration, ou procéder à un ajout volontaire d'Al pour obtenir des propriétés spécifiques. Pour un coût modéré, il augmente la résilience et peut participer au durcissement structural en formant des composés intermétalliques. Egalement, il limite l'oxydation pendant l'élaboration du métal liquide et les transformations du métal solidifié. Mais il faut éviter de former des nitrures d'Al et de gros oxydes contenant de l'Al pour ne pas dégrader la tenue en fatigue et la ténacité. De préférence il subsiste plus de 0,01% et moins de 1,0% d'Al dans l'acier final.

La teneur en Ti est comprise entre des traces et 0,1%. En évitant une présence significative de Ti (que d'autres aciers maraging exigent), on vise à empêcher la formation de nitrures de Ti au cours de la solidification du métal liquide, qui détériorent la tenue en fatigue du produit final. Dans l'invention, on obtient le durcissement structural désiré par d'autres moyens.

La teneur en N est imposée à un bas niveau, à savoir au plus 0,0050% (50 ppm), pour éviter la formation de nitrures autant que possible.

La teneur en Si est comprise entre 0,04% et 2,0%. Il peut être utilisé pour la désoxydation du métal liquide lors de l'élaboration, mais il faut veiller à éviter de conserver de gros oxydes contenant du Si (comme d'autres désoxydants) dans l'acier solidifié final, d'où la limite supérieure de 2,0%. Si stabilise la martensite, accroît la solubilité de certains éléments et ainsi homogénéise la structure. Il améliore aussi la limite élastique.

La teneur en Mn, élément non obligatoire, est comprise entre des traces et 4,0%, voire entre 0.2 et 4%. Le Mn améliore les propriétés mécaniques et les possibilités de travail à chaud. Mn est aussi lui-même un désoxydant efficace, et peut agir sur ce point en synergie avec le Si. Il faut cependant limiter sa teneur à 4% pour éviter de former de gros précipités, des phases fragiles, ou des phases à bas point de fusion. Enfin, il est gammagène et peut donc gêner la transformation martensitique s'il est présent en quantité excessive.

La teneur en C est comprise entre des traces et 0,03%. On veut ainsi former de la martensite douce, car la martensite au carbone est fragile et ne permet pas la mise en forme nécessaire au produit. On veut aussi éviter la formation de carbures qui dégraderaient les propriétés mécaniques.

La teneur en S est comprise entre des traces et 0,0020%, de préférence entre des traces et 0,0010%, pour ne pas former de sulfures qui dégraderaient la tenue en fatigue s'ils étaient présents en nombre et de grande taille. De plus, le S fragilise les joints de grains en y ségrégeant, d'où la formation possible de criques lors des sollicitations de l'acier. Il faut donc éviter la présence de S dissous, grâce à une sélection soigneuse des matières premières et/ou une désulfuration profonde. La teneur maximale tolérable précise est à ajuster selon les applications visées, d'une façon connue (dans la limite de 0,002% au plus, comme précisé plus haut).

La teneur en P est comprise entre des traces et 0,005%, de préférence moins, pour limiter la possibilité qu'il ne ségrège aux joints de grains, comme S.

B peut n'être présent qu'à l'état de traces, mais un ajout est préféré, jusqu'à 0,01%. Cet élément favorise l'affinement des structures et diminue la taille de grain. Il est bon pour les propriétés mécaniques, mais il ne faut pas en ajouter trop pour ne pas perdre en ductilité.

La teneur en H est limitée à 5 ppm pour éviter des problèmes de fragilisation par l'hydrogène. Le fait de réaliser un ou des traitements sous vide pendant l'élaboration du métal liquide et d'éviter les contaminations ultérieures du métal liquide par l'humidité ambiante, le laitier ou des matières ajoutées éventuelles permet généralement de ne pas dépasser ce niveau.

La teneur en O tolérable dépendrait, en toute rigueur, des applications envisagées pour le produit final, comme pour les teneurs tolérables en S, B et autres résiduels où éléments pouvant former des précipités. Mais on fixe la teneur maximale tolérable à 25 ppm, ce qui résulte des procédés employés lors de l'élaboration du métal liquide. On vise ainsi à ne pas avoir dans le produit final d'oxydes dont on ne pourrait pas maîtriser la composition, la répartition et la taille.

La teneur en Cr est comprise seulement à l'état de traces résultant de l'élaboration. Sa présence doit être limitée pour ne pas abaisser Ms et risquer de dégrader la qualité de la population inclusionnaire. Mais il augmente la résistance à l'oxydation, et aide la nitruration, de sorte qu'on peut parfois avoir des raisons d'en ajouter volontairement. Dans l'invention, on n'ajoute pas de Cr et on le laisse présent seulement à l'état de traces résultant de l'élaboration. De telles traces sont habituellement considérées comme étant des teneurs inférieures à 0,10%, voir par exemple le document EP-B1-1 339 880, cité dans l'introduction, qui dit que 0,06% sont de telles « traces ». On peut abaisser le niveau de Cr à des valeurs encore inférieures, par un choix très soigneux des matières premières.

La teneur en Cu est comprise entre des traces et 2,0%. L'ajout, s'il a lieu, doit être limité car Cu est gammagène. Mais Cu participe au durcissement et améliore la résistance à l'oxydation, d'où l'intérêt possible de cet ajout.

La teneur en W est comprise entre des traces et 4,0%. Il n'est donc pas obligatoire et peut être ajouté principalement lorsqu'on désire imposer une teneur en Co, voire aussi en Mo, assez basse, comme on l'a vu plus haut.

La teneur en Zr est comprise entre des traces et 4,0%. On peut désirer ajouter cet élément pour le faire contribuer à la désoxydation et à la formation de fins nitrures.

Ca et Mg peuvent être retrouvés dans le métal du fait de l'usure des réfractaires d'élaboration, sous forme d'oxydes ou de sulfures. On peut également désirer ajouter volontairement ces éléments pour qu'ils contribuent à la désoxydation. La teneur finale doit être limitée à 0,1% pour chacun, afin d'éviter la formation d'oxydes dont on ne pourrait pas maîtriser la taille et la répartition.

Nb, Ta et V peuvent être ajoutés jusqu'à 4,0% chacun, pour suppléer une teneur relativement faible en Co et/ou Mo, comme on l'a vu.

Les éléments non cités ne sont, au plus, présents qu'à l'état d'impuretés résultant de l'élaboration et ne sont pas ajoutés volontairement.

Par rapport aux aciers maraging du document EP-B1-1 339 880, on tend donc à se placer à des teneurs en Co et/ou Mo plus élevées que celles qui étaient à l'époque privilégiées.

Concernant la population inclusionnaire, le critère à respecter, selon l'invention, est que cette population inclusionnaire, observée par analyse d'image sur une surface polie de 650 mm$^2$ si l'acier est sous forme d'une pièce ou d'une tôle transformée à chaud, et de 800 mm$^2$ si l'acier est sous forme d'une tôle laminée à froid, ne comporte pas d'inclusions non-métalliques de diamètre équivalent supérieur à 10 $\mu$m, de préférence pas d'inclusions de taille supérieure à 8 $\mu$m, et, dans le cas d'une tôle transformée à chaud, ne comporte pas plus de quatre, inclusions non-métalliques de diamètre équivalent de 5 à 10 $\mu$m sur 100 mm$^2$ de la tôle transformée à chaud, l'observation étant réalisée par analyse d'image sur une surface polie de 650 mm$^2$.

Les inclusions non-métalliques considérées sont les oxydes, les sulfures et les nitrures. La population d'oxydes est maîtrisée principalement par le choix des méthodes d'élaboration (désoxydation contrôlée du métal liquide, après laquelle on prend soin d'éliminer le mieux possible les grosses inclusions, notamment par l'utilisation de procédés de refusion de l'électrode initialement coulée à partir du métal liquide). La population de sulfures est maîtrisée par l'imposition de teneurs en S très faibles, nécessitant un choix soigneux des matières premières et/ou une désulfuration du métal liquide. La population de nitrures est maîtrisée par l'imposition de teneurs en N basses ou très basses, grâce par exemple à l'utilisation de pressions réduites lors de l'élaboration du métal liquide et de la refusion de l'électrode, et à la limitation de la teneur en Ti du métal.

Les aciers selon l'invention sont préparés, par exemple, par les voies suivantes.

L'acier, d'abord élaboré à l'état liquide pour régler sa composition sur les éléments essentiels, est ensuite coulé sous forme d'électrodes de refusion. Ces électrodes sont :

- soit refondues une fois sous vide (procédé VAR, Vacuum Arc Remelting connu en lui-meme), ou sous laitier électroconducteur (procédé ESR, Electro Slag Remelting, connu en lui-même), pour former, après coulée et solidification de l'acier liquide, des lingots, des billettes ou des brames ;
- soit refondues plusieurs fois, sous vide (VAR) ou sous laitier électroconducteur (ESR) pour former, après la coulée et la solidification, des lingots ou des brames.

On réalise ainsi soit une simple refusion, soit une refusion multiple, par exemple VAR + VAR ou ESR + VAR. Ces refusions permettent d'épurer le métal et d'améliorer la qualité de la solidification en réduisant les ségrégations et en affinant sa structure de solidification. En particulier, la refusion ESR permet d'abaisser efficacement la teneur en soufre, et la refusion VAR permet d'abaisser efficacement les teneurs en azote.

Les lingots ou brames sont alors laminés à chaud, après un réchauffage entre 1050 et 1300°C, typiquement aux environs de 1200°C, pour obtenir des tôles ou des bandes laminées à chaud de quelques millimètres d'épaisseur, par exemple d'environ 1,5 à 5 mm d'épaisseur.

Les produits laminés à chaud ayant cette épaisseur peuvent, dans certains cas, être utilisés soit à l'état brut de laminage à chaud, soit dans un état recristallisé contrôlé. Une recristallisation peut éventuellement déjà se produire de façon suffisante lors du laminage à chaud et du séjour de la bande laminée à chaud sous forme de bobines, mais au cas où elle serait insuffisante pour obtenir la microstructure et/ou les propriétés mécaniques souhaitées, un recuit de recristallisation peut être effectué ensuite pour ajuster cette recristallisation. Dans ce dernier cas, l'homme du métier sait comment régler les paramètres du recuit de recristallisation (température, durée...) pour ajuster la microstructure (notamment la taille de grain) et les propriétés mécaniques souhaitées.

On vise, typiquement, après laminage à chaud et recristallisation éventuelle (voire d'autres types de traitements thermiques), des résistances à la traction Rm de 1010 MPa ou davantage, un module d'Young E de 130 GPa au minimum et un allongement réparti Ar de 2% ou davantage.

Ces bandes laminées à chaud, et éventuellement traitées thermiquement, peuvent aussi ne pas être destinées à être utilisées directement, et il est alors nécessaire de diminuer leur épaisseur par une mise en forme à froid pour les applications envisagées. Dans ce cas, elles sont décapées, puis laminées à froid, avec un ou plusieurs recuits intermédiaires entre les différentes passes du laminage à froid, et éventuellement un (ou des) recuit(s) final (finaux) de vieillissement, de recristallisation, ou d'autres types de traitements thermiques, ou des traitements de surface appropriés selon l'application visée (qui seront détaillés ensuite), pour obtenir des bandes laminées à froid d'épaisseur inférieure à 2 mm, de préférence inférieure ou égale à 1 mm, et par exemple de 0,4 mm ou de 0,2 mm d'épaisseur.

Le traitement de recristallisation de la bande laminée à froid est de préférence effectué à une épaisseur telle que la bande laminée à froid a, à ce moment, un taux d'écrouissage supérieur à 30%, mieux, supérieur à 40%. Il procure à la bande une taille de grain de ASTM 8 (diamètre moyen des grains de moins de 20 $\mu$m) ou plus fin, de préférence ASTM 10 (diamètre moyen des grains de moins de 10 $\mu$m) ou plus fin (selon la norme ASTM E112, pour laquelle on rappelle que le chiffre donnant la taille de grain est d'autant plus élevé que le grain est fin).

Le traitement de recuit destiné à obtenir un grain fin est réalisé sous atmosphère protectrice en ajustant convenablement les paramètres de température et de durée. Ces paramètres dépendent des conditions particulières de réalisation du traitement thermique, et l'homme du métier sait déterminer ces paramètres dans chaque cas particulier.

Les exigences préférentielles sur la taille des grains des produits laminés à froid, éventuellement traités thermiquement, sont d'ailleurs aussi, préférentiellement, valables sur les produits destinés à être utilisés à l'état laminé à chaud, éventuellement après avoir été traités thermiquement.

Afin d'améliorer la planéité de la bande, et, si nécessaire, de parfaire la transformation martensitique, la bande peut en outre être soumise à un laminage à froid final léger (skin-pass ou planage) avec un taux de réduction compris entre 1 et 10%.

Typiquement, les traitements de durcissement (vieillissement) de la bande laminée à froid sont de préférence effectués à une épaisseur telle que la bande laminée a, à ce moment, un taux d'écrouissage supérieur à 30%, mieux, supérieur à 40%.

On peut alors découper dans la bande une pièce, et mettre en forme cette pièce, par exemple par pliage, soudage..., puis effectuer sur celle-ci un traitement de durcissement, consistant en un maintien entre 400 et 600°C pendant 30 min à 5 h. (de préférence de préférence à 420-550°C pendant 30 min à 2 h, par exemple 420°C pendant 30min ou 480°C pendant 2h)

Les produits laminés à chaud sont également susceptibles de subir un traitement de durcissement, typique des aciers maraging, avec les bénéfices classiquement attendus d'un tel traitement sur leurs propriétés mécaniques.

Les produits laminés à froid, et éventuellement traités thermiquement, selon l'invention ont une résistance à la traction Rm d'au moins 2270 MPa, une limite élastique conventionnelle $Rp_{0,2}$ d'au moins 2250 MPa, et un allongement réparti Ar d'au moins 2%.

Ces caractéristiques peuvent d'ailleurs aussi, optimalement, être atteintes sur des produits laminés à chaud traités thermiquement de façon adéquate, par exemple s'ils ont subi une recristallisation importante lors de la mise en forme à chaud ou lors d'un traitement postérieur ayant conduit à une telle recristallisation.

Les produits peuvent ensuite être durcis en surface (par nitruration, cémentation, carbonitruration, grenaillage...) afin d'accroître leurs performances en fatigue. Typiquement, à sollicitation équivalente, les produits ainsi obtenus peuvent avoir des durées de vie en fatigue supérieures de 10 000 à 50 000 cycles à celles des nuances habituelles, ou, pour une durée de vie égale, supporter une contrainte accrue de plus de 50 MPa. La dureté en extrême surface Hv0,1 peut être typiquement d'au moins 1050 sans que des procédés et des conditions de nitruration autres que des procédés et conditions standard soient nécessaires.

Des expériences ont été menées sur six échantillons d'un acier conforme à l'invention et sur des échantillons de référence, dont les compositions sont résumées dans le tableau 1, exprimées en % pondéraux, ou en ppm pour certains éléments. Le reste est du fer et des impuretés résultant de l'élaboration et qui sont à un niveau sans importance pour les propriétés considérées.

| Ech. | Ni | Mo | Co | Al | Ti | N (ppm) | Si | Mn | C | S | P | B | H$_2$ (ppm) | O ppm) |
|------|-----|-----|------|-------|--------|---------|-------|-------|-------|---------|--------|----------|------|------|
| Inv. 1 | 18,20 | 7,00 | 17,68 | 0,083 | 0,007 | 19 | 0,040 | 0,077 | 0,002 | 0,0006 | 0,0023 | 0,0005 | 0,2 | 5 |
| Inv. 2 | 18,14 | 4,96 | 19,82 | 0.04 | <0,005 | 28 | 0,050 | 0,088 | 0,003 | 0,0002 | 0,0029 | <0.0002 | <0.2 | 21 |
| Inv.3 | 18,24 | 7,07 | 15,78 | <0,005 | 0,007 | 34 | 0,049 | 0,088 | 0,003 | <0,0002 | 0,0030 | 0,0004 | <0.2 | 6 |
| Inv.4 | 18,12 | 6,96 | 16,05 | 0,026 | 0,007 | 18 | 0,040 | 0,195 | 0,002 | 0,0003 | 0,0024 | 0,0002 | <0,2 | 5 |
| Inv.5 | 18,15 | 6,96 | 20,02 | 0,018 | 0,007 | 24 | 0,050 | 0,100 | 0,003 | 0,0005 | 0,0030 | 0,0003 | <0,2 | 7 |

| Ech. | Ni | Mo | Co | Al | Ti | N (ppm) | Si | Mn | C | S | P | B | H$_2$ (ppm) | O ppm) |
|------|-----|-----|------|-------|--------|---------|-------|--------|-------|--------|--------|---------|------|------|
| Inv.6 | 18,24 | 5,21 | 18,14 | 0,030 | 0,007 | 22 | 0,070 | 0,120 | 0,002 | 0,0004 | 0,0021 | 0,0004 | <0,2 | 6 |
| Inv.7 | 18,3 | 4,98 | 20,12 | 0,02 | < 0,005 | 15 | 0,08 | 0,600 | 0,002 | 0,0003 | 0,0027 | 0,0002 | <0,2 | 7 |
| Réf. 1 | 18,18 | 5,30 | 16,41 | 0,023 | <0.005 | 8 | 0,068 | 0,071 | 0,007 | 0,0004 | 0,0022 | <0,0002 | <0,2 | < 5 |
| Réf. 2 | 18,33 | 4.98 | 8.99 | 0.116 | 0.473 | < 5 | 0.047 | <0.005 | 0.006 | 0.0004 | 0.0030 | <0.0002 | <0,2 | <5 |

| Ech | Cr | Cu | W | Zr | Ca | Mg | Nb | V | Ta | Mo + Co + Si + Mn + Cu + W + V + Nb + Zr + Ta + Cr + C | Co + Mo | Ni + Co + Mo | Fe |
|------|-------|-------|--------|--------|---------|--------|--------|--------|--------|-------|-------|-------|------|
| Inv. 1 | 0 ,055 | 0,056 | traces | <0.002 | 0,0010 | traces | traces | traces | traces | 24,91 | 24,68 | 42,88 | reste |
| Inv. 2 | 0,063 | 0,069 | traces | <0,002 | 0,0011 | traces | traces | traces | traces | 25,05 | 24,78 | 42,92 | reste |
| Inv. 3 | 0,069 | 0,063 | traces | <0,002 | 0,0011 | traces | traces | traces | traces | 23,12 | 22,85 | 41,09 | reste |
| Inv.4 | 0,030 | 0,056 | traces | <0.002 | 0,0010 | traces | traces | traces | traces | 23,3 | 23,01 | 41,13 | reste |
| Inv.5 | 0,040 | 0,056 | traces | <0,002 | 0,0010 | traces | traces | traces | traces | 27,2 | 26,98 | 45,13 | reste |
| Inv.6 | 0,050 | 0,056 | traces | <0,002 | 0,0010 | traces | traces | traces | traces | 23,6 | 23,35 | 41,59 | reste |
| Inv.7 | 0,050 | 0,056 | traces | <0,002 | 0,0010 | traces | traces | traces | traces | 25,9 | 25,10 | 43,4 | reste |
| Ref. 1 | 0,067 | 0,065 | traces | <0,002 | <0,0005 | traces | traces | traces | traces | 21,92 | 21,71 | 39,89 | reste |
| Réf. 2 | 0,065 | 0,005 | traces | <0.002 | 0.0006 | traces | traces | traces | traces | 14,10 | 13,97 | 32,3 | reste |

Tableau 1 : Compositions des échantillons testés

Les élaborations des aciers selon l'invention et des aciers de référence, sur lesquels ont été prélevés les échantillons du tableau 1, ont été réalisées selon le schéma suivant, de façon à obtenir des bandes d'épaisseur 0,4 mm.
Pour Ref.1 et 2 et pour Inv.1, 5 et 7, on a élaboré l'acier en poche, puis appliqué les procédés VIM, puis VAR.
Pour Inv.2, 3, 4 et 6, on a élaboré l'acier en poche, puis appliqué le procédé VIM, puis le procédé ESR.
Puis les lingots VAR ou ESR ont été transformés en brames, par blooming avec une réduction d'épaisseur portant cette épaisseur à entre 200 et 100 mm (typiquement 160 mm).
Puis les brames ont été laminées à chaud jusqu'à l'épaisseur 3.5 mm, après un réchauffage à environ 1300°C. Le métal a ensuite été décapé, et a été laminé à froid jusqu'à une épaisseur de 0.4 mm. Le recuit d'austénitisation ou de mise en solution, le recuit de recristallisation et le recuit de vieillissement ont été effectués respectivement entre 800 et 1000°C pendant 15 à 60 min, puis entre 350 et 600°C pendant 30min à 240min, et entre 420 et 510°C pendant 30 à 90 min.
Le tableau 2 présente les densités inclusionnaires de chaque échantillon du tableau 1, à l'issue du laminage à chaud. Elles ont été évaluées tout d'abord selon la norme DIN 50602-M, puis affinées en comptage par analyse d'images en microscopie optique sur des aires de 650 mm$^2$ d'échantillons des bandes laminées à chaud de 3,5 mm d'épaisseur. Puis ces densités ont été ramenées à une surface de 100 mm$^2$ d'échantillon. Il doit être entendu que par « diamètre » des inclusions, on veut dire « diamètre équivalent », c'est-à-dire celui d'une inclusion qui serait de section circulaire et aurait la même surface que l'inclusion observée, si celle-ci a une section plus complexe que celle d'un simple cercle. De plus l'analyse d'image optique ne distinguant que des contrastes colorés et ne différenciant pas la composition des inclusions, les inclusions appelées « TiN », dans le tableau ci-dessous, sont les inclusions de contraste coloré orange par expérience de l'homme de métier (ce qui peut être vérifié à postériori en microscopie électronique à balayage). Les inclusions notées « oxydes » sont les inclusions de contrastes gris en microscopie optique (ces inclusions sont effectivement des oxydes, voire, en moindres proportions, des sulfures, ou des inclusions mixtes oxydes-sulfures). Ces analyses sont usuelles pour l'homme de métier et complétées, dans le cas présent, par des analyses en Microscopie électronique à balayage automatisée.

Tableau 2 : Densités inclusionnaires des divers échantillons laminés à chaud testés, ramenées à une densité de particules pour 100 mm$^2$

| Ech | Inclusions de TiN > 10 $\mu$m | Inclusions de TiN de 5 à 10 $\mu$m | Inclusions d'oxydes > 10 $\mu$m | Inclusions d'oxydes de 5 à 10 $\mu$m |
|---|---|---|---|---|
| Inv.1 | 0,0 | 0,0 | 0,0 | 3,1 |
| Inv.2 | 0,0 | 0,0 | 0,0 | 2,3 |
| Inv.3 | 0,0 | 0,0 | 0,0 | 1,6 |
| Inv.4 | 0,0 | 0,0 | 0,0 | 1,9 |
| Inv.5 | 0,0 | 0,0 | 0,0 | 3,6 |
| Inv.6 | 0,0 | 0,0 | 0,0 | 2,1 |
| Inv.7 | 0,0 | 0,0 | 0,0 | 1,7 |
| Ref.1 | 0,0 | 0,0 | 0,0 | 8,9 |
| Ref.2 | 0,8 | 40,8 | Non mesuré | Non mesuré |

Ces résultats montrent que dans la cas des échantillons selon l'invention, on a des densités inclusionnaires faibles et une absence complète d'inclusions de taille relativement importante, à savoir supérieure à 10 $\mu$m. De telles grosses inclusions sont également absentes de l'échantillon de référence 1, mais le nombre de petites inclusions d'oxydes (5 à 10 $\mu$m de diamètre) est significativement plus élevé que dans le cas des échantillons selon l'invention, ce qui est défavorable aux propriétés mécaniques et ne correspond pas à la densité inclusionnaire optimale visée. Quant à l'échantillon de référence 2, il comporte une densité de nitrures trop élevée, y compris de nitrures de taille supérieure à 10 $\mu$m. Cette caractéristique est, à elle seule, rédhibitoire pour atteindre l'objectif recherché d'une excellente tenue en fatigue, et il n'a pas été jugé utile de s'intéresser aux oxydes de cet échantillon.

Le tableau 3 montre la taille maximale des inclusions observées sur des surfaces de 650 mm$^2$ des échantillons précédents laminés à chaud.

Tableau 3 : Taille maximale des inclusions observées sur prélèvements de 650mm$^2$ des divers échantillons laminés à chaud testés

| Ech | Taille de l'inclusion la plus grosse ($\mu$m) | Nature de l'inclusion la plus grosse |
|---|---|---|
| Inv.1 | 6.18 | oxyde |
| Inv.2 | 6.12 | oxyde |
| Inv.3 | 5.71 | oxyde |
| Inv.4 | 6,54 | oxyde |
| Inv.5 | 7, 32 | oxyde |
| Inv.6 | 6,12 | oxyde |
| Inv.7 | 8,78 | oxyde |
| Ref.1 | 7.76 | oxyde |
| Ref.2 | 10.60 | TiN |

Les échantillons selon l'invention ne comportent donc que des inclusions de faible diamètre, et en très faible nombre. En particulier il n'y a aucun nitrure de Ti, ce qui est à relier notamment à l'absence de Ti et à la très faible teneur en N. L'échantillon de référence 1 est dans le même cas, quoique la densité inclusionnaire et le diamètre de ses inclusions les plus grosses soient un peu plus élevés que dans le cas de l'invention. Quant à l'échantillon de référence 2, il se confirme que les nitrures (de Ti principalement) y sont prépondérants et présents sous forme d'inclusions peu ductiles et de taille souvent excessive pour que les objectifs d'une excellente tenue en fatigue puissent être tenus.

Des observations en microscopie optique et électronique ont aussi montré que la présence d'inclusions de toutes sortes de diamètre équivalent de moins de 5 $\mu$m était faible, particulièrement pour l'échantillon Inv.3 qui est aussi celui qui contient le moins d'oxydes de 5-10 $\mu$m.

L'homme du métier sait que la transformation à froid n'affectera la taille des inclusions qu'à la baisse en les fractionnant éventuellement, mais ne peut en aucun cas accroitre ces proportions.

Enfin, les populations inclusionnaires ont été plus précisément caractérisées par comptage et analyse automatisées en microscopie électronique à balayage avec canon à émission de champ (MEB FEG) sur des surfaces de 200 à 2 mm$^2$ (par des grossissements respectifs de x300, x1000, x10 000), et leurs densités surfaciques évaluées.

Les nuances selon l'invention, de même que la nuance de référence 1, présentent l'avantage, de par leur composition chimique intrinsèque, de ne pas former de nitrures lors des élaborations, et de permettre de contrôler la taille et la nature des inclusions résiduelles, notamment d'oxydes. Grâce à un contrôle soigné des matières premières utilisées et aux procédés d'élaboration mis en oeuvre, qui procurent de basses teneurs en éléments résiduels N, S et P, et grâce à une désoxydation du métal liquide, les particules d'oxydes formées sont de tailles limitées, inférieures à 10 $\mu$m, de préférence inférieures à 8 $\mu$m, et de compositions adéquates obtenues par les gammes d'élaboration décrites. On forme de façon privilégiée des oxydes à base d'aluminium, par exemple des oxydes mixtes d'Al et de Mg (cet élément provenant inévitablement des laitiers et des réfractaires des récipients d'élaboration), et aussi, éventuellement, de l'alumine en proportion variable.

La proportion en fraction volumique de ces familles d'oxydes à base d'aluminium ou en contenant significativement est supérieure à 30%, sachant que :

- les oxydes de type alumine pure se distinguent par des teneurs en Al supérieures à 35% et en O inférieure à 65% (teneurs mesurées par spectroscopie à dispersion d'énergie EDX) ;
- les oxydes contenant du magnésium se distinguent en analyse par EDX par la présence de Mg à plus de 1.5%, d'Al à plus de 10% et d'O à plus de 60%, cette dernière famille pouvant contenir des proportions moindres de Ca et/ou de Si, ou être associée à des sulfures de petites tailles.

Les propriétés mécaniques importantes des divers échantillons (sauf les propriétés en fatigue, qui seront vues plus loin) sont résumées dans les tableaux 4, 5 et 6, le tableau 4 concernant les échantillons au stade laminé à chaud, le tableau 5 concernant les échantillons à l'état laminé à froid, avant le recuit de vieillissement provoquant le durcissement par précipitation, et le tableau 6 correspondant à l'état laminé à froid et vieilli. Les propriétés ont été mesurées à la fois dans le sens longitudinal par rapport à la direction de laminage de la bande et selon le sens travers, perpendiculaire à ladite direction de laminage. Ces propriétés sont le module d'Young E (pour les échantillons laminés à chaud), la dureté Vickers HV 1 (pour les échantillons laminés à froid, non vieillis et vieillis), la limite élastique conventionnelle $Rp_{0.2}$ (exprimée en MPa), la résistance mécanique maximale en traction Rm (exprimée en MPa), l'allongement à la rupture A, l'allongement réparti Ar (exprimé en % et mesuré à partir d'éprouvettes de longueur $L_0$ égale à 5,65 fois la racine carrée de la section initiale $S_0$) et l'allongement total At.

Tableau 4 : Propriétés mécaniques des échantillons à l'état laminé à chaud

| Ech. | | E (MPa) | $Rp_{0.2}$ (MPa) | Rm (MPa) | Ar (%) | At (%) |
|---|---|---|---|---|---|---|
| Inv.1 | Sens long | 174 285 | 871 | 1046 | 2,5 | 22,0 |
| | Sens travers | 163 614 | 838 | 1051 | 3,1 | 22,6 |
| Inv.2 | Sens long | 176 466 | 868 | 1013 | 2,0 | 20,2 |
| | Sens travers | 172 838 | 860 | 1018 | 2,0 | 20,7 |
| Inv.3 | Sens long | 157 539 | 843 | 1048 | 3,7 | 22,5 |
| | Sens travers | 131 607 | 751 | 1046 | 3,2 | 18,8 |
| Inv.4 | Sens long | 149 278 | 837 | 1047 | 3,5 | 20,6 |
| Inv.5 | Sens long | 174 658 | 862 | 1020 | 2,1 | 20,5 |
| Inv.6 | Sens long | 166 634 | 841 | 1045 | 2,6 | 18,6 |
| Inv.7 | Sens long | 177 206 | 870 | 1015 | 2,0 | 20,4 |

(suite)

| Ech. | | E (MPa) | Rp$_{0.2}$ (MPa) | Rm (MPa) | Ar (%) | At (%) |
|---|---|---|---|---|---|---|
| Réf.1 | Sens long | 173 863 | 783 | 1051 | 1,9 | 14,6 |
| | Sens travers | 167 658 | 757 | 1053 | 1,8 | 14,9 |

Tableau 5 : Propriétés mécaniques des échantillons à l'état laminé à froid

| Ech. | | HV 1 | Rp$_{0.2}$ (MPa) | Rm (MPa | A (%) |
|---|---|---|---|---|---|
| Inv.1 | Sens long | 385 | 1358 | 1378 | 5,0 |
| | Sens travers | 394 | 1417 | 1451 | 3,1 |
| Inv.2 | Sens long | 370 | 1269 | 1294 | 5,6 |
| | Sens travers | 372 | 1336 | 1368 | 3,3 |
| Inv.3 | Sens long | 390 | 1348 | 1369 | 4,8 |
| | Sens travers | 392 | 1407 | 1438 | 3,0 |
| Inv.4 | Sens long | 391 | 1354 | 1375 | 4,5 |
| Inv.5 | Sens long | 389 | 1360 | 1382 | 4,8 |
| Inv.6 | Sens long | 376 | 1260 | 1304 | 5,1 |
| Inv.7 | Sens long | 374 | 1276 | 1318 | 4,9 |
| Ref.1 | Sens long | 370 | 1226 | 1198 | 5,7 |
| | Sens travers | 373 | 1272 | 1284 | 5,2 |
| Réf.2 | Sens long | 315 | 987 | 1021 | 11,4 |
| | Sens travers | 318 | 1022 | 1058 | 8,7 |

Tableau 6 : Propriétés mécaniques des échantillons à l'état laminé à froid et vieilli

| Ech | | HV 1 | Rp$_{0.2}$ (MPa) | Rm (MPa | A (%) |
|---|---|---|---|---|---|
| Inv.1 | Sens long | 669 | 2329 | 2353 | 2,7 |
| | Sens travers | 671 | 2349 | 2373 | 2,0 |
| Inv.2 | Sens long | 663 | 2251 | 2269 | 2,7 |
| | Sens travers | 660 | 2284 | 2299 | 2,3 |
| Inv.3 | Sens long | 658 | 2258 | 2277 | 2,0 |
| | Sens travers | 667 | 2309 | 2330 | 2,0 |
| Inv.4 | Sens long | 660 | 2260 | 2278 | 2,6 |
| Inv.5 | Sens long | 676 | 2332 | 2360 | 2,1 |
| Inv.6 | Sens long | 636 | 2174 | 2204 | 2,8 |
| Inv.7 | Sens long | 666 | 2276 | 2302 | 2,3 |
| Réf.1 | Sens long | 621 | 2101 | 2132 | 2,6 |
| | Sens travers | 624 | 2139 | 2159 | 2,5 |
| Réf.2 | Sens long | 536 | 1823 | 1850 | 4,9 |
| | Sens travers | 539 | 1845 | 1880 | 4,8 |

Comme cela était prévisible, celles des propriétés mécaniques qui sont les plus importantes pour les applications privilégiées de l'invention dans le cas de produits laminés à froid sont bien plus favorables après le vieillissement qu'elles ne le sont après un simple laminage, et le vieillissement permet également de fortement atténuer les différences entre les limites élastiques, les résistances à la traction et les allongements à la rupture en sens long et en sens travers constatées sur l'état laminé à froid.

On notera aussi que l'exemple Inv.6 n'a pas, après vieillissement, une résistance à la traction et une limite élastique qui correspondraient aux buts visés à ce stade. Cela est probablement à attribuer au fait que sa teneur en Mo est relativement faible et que sa teneur en Co ne permet pas de compenser cette faiblesse pour obtenir des propriétés optimales après vieillissement. Il serait à comparer avec l'exemple Inv.2, pour lequel la teneur en Mo est aussi relativement basse, mais où la teneur en Co sensiblement plus élevée que pour Inv.6 permet d'obtenir cette compensation. L'exemple Inv.6 doit néanmoins être considéré comme relevant de l'invention, du fait que ses propriétés à l'état laminé à chaud sont conformes aux exigences de la variante correspondante de l'invention.

On a également remarqué que pour des traitements thermiques de mise en solution et vieillissement un peu différents de celui donné en exemple pour l'établissement du tableau 6, les duretés obtenues variaient relativement peu. Pour l'échantillon Inv.1 traité à 850°C pendant 30 min puis à 450°C pendant 2 h, la dureté obtenue est de 699 HV 1. Pour l'échantillon Inv.2 traité à 850°C pendant 30 min puis à 500°C pendant 1 h, la dureté obtenue est de 642 HV 1. Pour l'échantillon Inv.3 traité à 850°C pendant 30 min puis à 450°C pendant 4 h, la dureté obtenue est de 678 HV 1.

Les conditions de vieillissement ont été explorées sur produits laminés à froid en vue de leur optimisation (après recuit de standardisation ou mise en solution). Un recuit de mise en solution à 850°C pendant 30 minutes sous argon a été mis en oeuvre préalablement sur chaque nuance (parmi plusieurs conditions explorées entre 800° et 1000°C sous argon), permettant d'accéder à une structure austénitique et homogène. Puis différents couples (temps-température) ont été expérimentés sur ces matériaux recuits afin de préciser des conditions de vieillissement adaptées aux applications visées.

Puis selon les conditions de vieillissement explorées, sous argon entre 350° et 600°C, les optimums en termes de dureté ont été précisés.

La nuance Inv.1 préfère des conditions de vieillissement comprises entre 450° et 550°C pour des durées de 30 min à 5h, pour atteindre des duretés Hv à l'état vieili de plus de 675. On atteint 730 Hv pour un vieillissement à 500°C pendant 1h.

La nuance Inv.2 peut atteindre des niveaux de dureté en surface supérieurs à 600 Hv pour des vieillissements à moins de 550°C, pendant des durées de 30 min à 5 h, de préférence 500°C pendant 1 h pour atteindre 630 à 640 Hv ;

La nuance Inv.3 peut atteindre des niveaux de dureté en surface supérieurs à 650 Hv pour des vieillissements à des températures de plus de 550°C pendant 30 min à 5 h.

Pour des conditions de vieillissement comprises entre 450° et 550°C pendant 30 min à 3 h, les nuances Inv.4 et Inv.5 ont accédé à des niveaux de dureté supérieurs à 650 Hv avec des durées de traitement inférieures à 2 h. A titre d'exemple, on a obtenu des duretés de 660 Hv pour Inv.4, et 676 Hv pour Inv.5, pour des traitements sous Ar à 480°C durant 3 h.

De même les nuances Inv.6 et Inv.7 présentent des duretés respectives de 636 et 666 Hv avec des conditions de vieillissement de 3 h à 480°C.

Il est notable ici que ces nuances selon l'invention sont compatibles avec des conditions de vieillissement qui autorisent des caractéristiques mécaniques accrues, mais qu'elles présentent en plus des facilités de mises en oeuvre tant en termes de procédés que de coûts associés. En effet la stabilité des propriétés obtenues, notamment la dureté, permet la mise en oeuvre de recuits de courtes durées (typiquement 30 minutes) pour obtenir des propriétés identiques ou comparables à celles obtenues par des traitements d'une durée de 4 à 5 h sur des nuances classiques. Ces qualités de simplicité et d'économie des traitements thermiques sont particulièrement avantageuses pour ces nuances selon l'invention.

Ces nouvelles nuances selon l'invention présentent des propriétés mécaniques (dureté, limite élastique, résistance à rupture...) accrues par rapport aux références Ref.1 et Réf.2, dans des conditions de vieillissement optimisées, qui, associées à une population inclusionnaire améliorée, permettent d'accéder à des propriétés également accrues lors de sollicitation dynamiques, en fatigue par exemple.

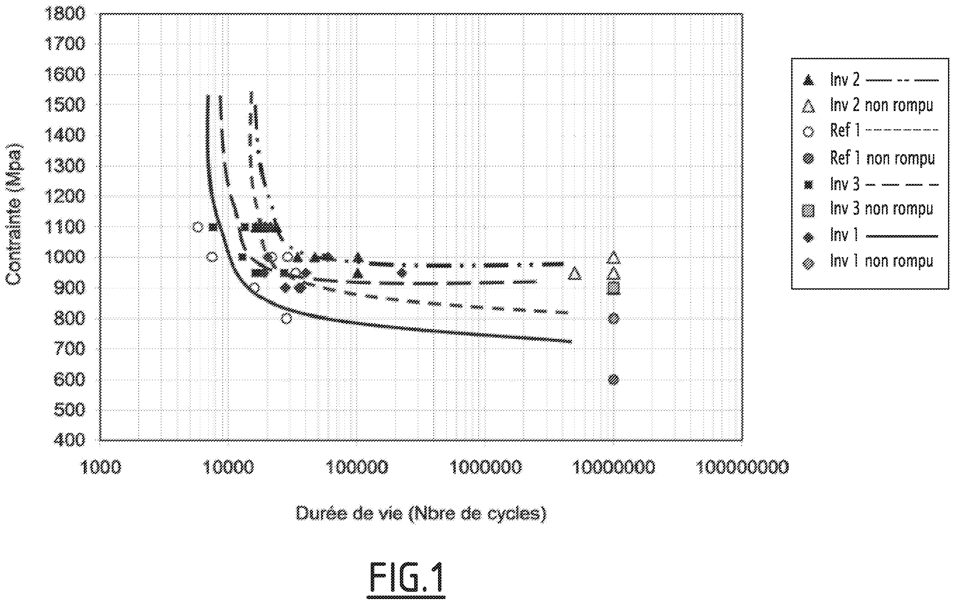

A ce titre des échantillons selon l'invention et l'échantillon Réf. 1 ont été testés en fatigue, à l'état vieilli non nitruré, sur un équipement hydraulique INSTRON à fréquence 25 Hz, en sollicitation à R = 0,1, sur des matériaux laminés à froid (d'épaisseur de moins de 5 mm) traités à 850°C pendant 30 min puis à 450°C pendant 2 h sous Ar. Ces conditions de vieillissement ne sont pas optimisées pour toutes les nuances, mais permettent de comparer les nuances entre elles dans une même condition de vieillissement). Les résultats de ces essais de fatigue sont présentés sur la figure 1. Elle montre en fonction du nombre de cycles imposé le niveau de contrainte auquel une rupture a été constatée sur les divers échantillons. On a également reporté pour chaque échantillon des résultats d'essais réalisés pour un nombre de cycles très élevé supérieur à 10 millions (trois essais pour l'échantillon Inv.2, un essai pour les autres), avec des niveaux de contrainte qui n'ont pas entraîné de rupture de l'échantillon.

Dès 50 000 cycles les exemples selon l'invention Inv.1, Inv.2 et Inv.3 supportent en endurance des contraintes supérieures à la référence 1, et à contrainte imposée, l'endurance des exemples selon l'invention est accrue. La référence 2 n'a pas été testée, car au vu de sa teneur en nitrures il était assuré que ses essais en fatigue donneraient des résultats de moindre qualité en comparaison de ceux des autres échantillons.

Enfin, les propriétés améliorées de ces nuances selon l'invention ont aussi été explorées après un traitement de mise en compression de la surface. En l'occurrence, sur ces matériaux à fines épaisseur sollicités en fatigue, des traitements de nitruration sont traditionnellement mis en oeuvre avant sollicitation, afin de retarder l'amorce de fissuration en surface. Cette mise en compression peut aussi être réalisée par un grenaillage, de façon connue.

Ainsi, diverses conditions de nitruration ont été testées pour les nuances selon l'invention, parmi lesquelles des traitements compris entre 420 et 510°C de 30 à 90 min en atmosphère gazeuse (sous $NH_3$ ou sous une atmosphère de $NH_3$ craqué), ainsi que par nitruration ionique.

Les couches nitrurées sont constituées par la diffusion d'azote au sein des diverses matrices, constituant des épaisseurs caractéristiques de quelques dizaines de $\mu$m, évaluées par attaque chimique ou profil par spectrométrie à décharge luminescente (SDL). Elles contiennent parfois des précipités fins uniformément distribués, dont on peut éventuellement, si utile, ajuster la nature chimique en jouant sur la composition de l'acier et les conditions de nitruration.

Dans la gamme de températures et de durées explorée, les nuances selon l'invention révèlent des propriétés de surface accrues après nitruration, si on les compare aux références 1 et 2. Le tableau 7 illustre à titre d'exemple des niveaux de dureté évalués par micro indentation selon des modalités identiques. Trois cas de traitements de nitruration ont été testés, en plus des conditions variables de durée et de température :

- Nitruration gazeuse sous $NH_3$ (essais NG1) ;
- Nitruration gazeuse sous $NH_3$ craqué (essais NG2) ;
- Nitruration ionique (essais NI).

Tableau 7 : Duretés Hv0.1 évaluées par micro indentation en extrême surface selon différentes conditions de nitruration.

| Nitruration | Réf.2 | | | Ref.1 | | | Inv. 1 | | | Inv.2 | | | Inv.3 | | | Inv.4 | Inv.5 | Inv.6 | Inv.7 |
|---|---|---|---|---|---|---|---|---|---|---|---|---|---|---|---|---|---|---|---|
| | NG1 | NG2 | NI | NG1 | NG2 | NI | NG1 | NG2 | NI | NG1 | NG2 | NI | NG1 | NG2 | NI | NG2 | NG2 | NG2 | NG2 |
| 420°C, 30 min | 820 | 775 | 610 | 880 | 660 | 820 | 900 | 860 | 850 | 940 | 1008 | 1020 | 790 | 860 | 820 | 900 | 1010 | 710 | 1015 |
| 420°C, 60 min | 650 | | 840 | 780 | | 910 | 1000 | | 900 | 840 | | 925 | 1320 | | 1000 | | | | |
| 420°C, 90 min | 820 | | 685 | 685 | | 900 | 860 | | 1070 | 810 | | 1040 | 1020 | | 1105 | | | | |
| 450°C, 30 min | 995 | 922,5 | 785 | 720 | 625 | 1030 | 900 | 870 | 970 | 790 | 875 | 865 | 950 | 995 | 950 | 1002 | 980 | 650 | 940 |
| 450°C, 60 min | 765 | | 840 | 745 | | 980 | 805 | | 1055 | 910 | | 920 | 555 | | 1085 | | | | |
| 450°C, 90 min | 940 | | 750 | 800 | | 980 | 725 | | 970 | 810 | | 880 | 620 | | 855 | | | | |
| 480°C, 30 min | 1105 | 900 | 660 | 780 | 887 | 985 | 940 | 890 | 1095 | 825 | 940 | 860 | 740 | 943 | 880 | 985 | 945 | 880 | 960 |
| 480°C, 60 min | 1125 | | 900 | 1050 | | 740 | 820 | | 930 | 815 | | 800 | 940 | | 660 | | | | |
| 480°C, 90 min | 950 | | 940 | 870 | | 840 | 780 | | 1100 | 700 | | 920 | 960 | | 910 | | | | |
| 510°C, 30 min | 855 | 680 | 945 | 700 | 900 | 840 | 750 | 848 | 985 | 720 | 773 | 1065 | 780 | 933 | 995 | 940 | 850 | 800 | 850 |
| 510°C, 60 min | 690 | | 870 | 965 | | 760 | 770 | | 730 | 815 | | 880 | 820 | | 820 | | | | |
| 510°C, 90 min | 830 | | 850 | 690 | | 890 | 590 | | 750 | 590 | | 790 | 760 | | 775 | | | | |

Il doit être entendu que les incertitudes de mesure sur ce type d'essais sont importantes lorsque que, comme c'est le cas ici, les essais sont réalisés sur des échantillons à surfaces brutes et empreintes locales. Il faut donc interpréter les résultats du tableau 7 en termes de tendance générale.

Ainsi, en plus d'avoir une matrice performante en fatigue, les échantillons selon l'invention présentent notamment une meilleure résistance mécanique en surface et une résistance accrue aux frottements, grâce à un accroissement de la dureté de surface après nitruration par rapport aux échantillons de référence 1 et 2. Ainsi, des gains de plus de 50 Hv0.1 par rapport aux références 1 et 2 peuvent être aisément escomptés, pour des durées de nitruration réduites. On peut ainsi atteindre des duretés d'extrême surface de plus de 1050 Hv0.1 sur les nuances selon l'invention, dans des conditions de nitruration adéquates et qui ne sont pas particulièrement exigeantes.

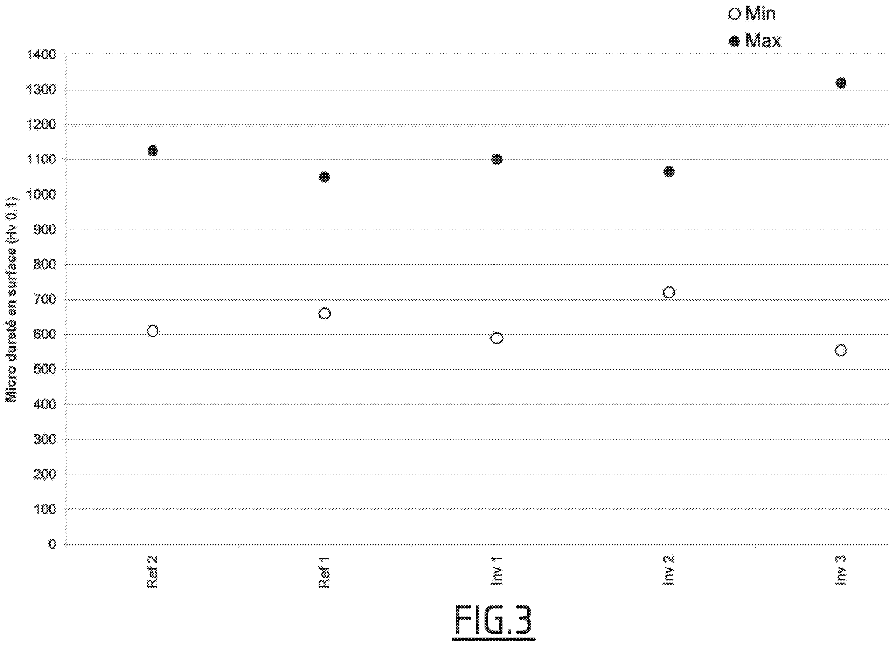

Les valeurs minimales et maximales de dureté atteintes en extrême surface selon les différentes conditions de nitruration pour les échantillons Réf.1 et 2 et Inv.1 à 3 sont reportées dans la figure 3.

Enfin, on a vérifié que ces duretés importantes accessibles en surface s'accompagnent de la présence de contraintes résiduelles (évaluées par diffraction des rayons X) qui permettent de mettre la surface en compression par rapport à la matrice et retarder ainsi l'amorce de fissuration en surface.

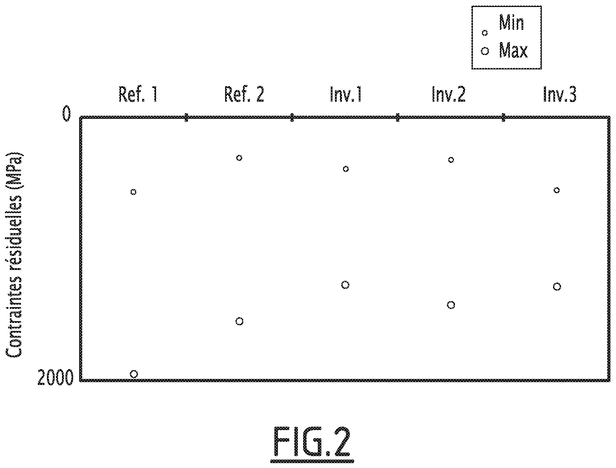

La figure 2 est une évaluation qualitative des contraintes résiduelles de compression en surface des tôles laminées nitrurées, pour les échantillons Réf.1, Réf.2, Inv.1, Inv.2 et Inv.3. Pour chaque échantillon on a porté les valeurs minimales et maximales des contraintes de compression évaluées pour l'ensemble des essais effectués en faisant varier les procédés, les températures et les durées de nitruration. L'évaluation des contraintes résiduelles au sein des couches nitrurées a été réalisée en surface des échantillons avec les paramètres suivants : Chi variant de 0 à 51 °, intervalle de mesure 1s, $\sin^2$ (psi) de 0 à 0.6 par pas de 0.1. Les valeurs obtenues dans ces conditions permettent de déterminer en suivant l'évolution de la position de la raie du Fe le niveau de contrainte en surface du matériau. On voit que les contraintes résiduelles des échantillons selon l'invention ne sont pas dégradées de manière significative par rapport à celles observées sur les échantillons de référence.

Il est aussi plus aisé, par l'utilisation de l'invention, de maîtriser la composition de la couche nitrurée et, donc, de l'adapter aux besoins particuliers de l'utilisation envisagée pour les futurs produits. Si cela paraît préférable, on peut ainsi aisément éviter la présence en extrême surface de phases communément appelées « couches de combinaison » au sein des couches nitrurées. Ces phases résultent de la précipitation de nitrures de fer de types $Fe_4N$, $Fe_2N$, $Fe_2N_{1-x}$…

De manière générale, les aciers selon l'invention présentent dans différentes conditions de nitruration des performances d'usage et économiques accrues par rapport aux aciers de référence relevant de l'art antérieur, dans la mesure où la couche de nitruration est plus aisément contrôlable :

- pour sa composition, en particulier concernant l'existence ou non de couches de combinaison ;
- pour son épaisseur ;
- pour les niveaux de dureté accessibles dans des conditions de nitruration données ;
- pour la distribution dans l'épaisseur de la couche des teneurs en azote, des phases précipitées, de leur nature et de leur répartition, ainsi que des niveaux de dureté, des contraintes résiduelles ;
- pour la facilité et l'économie des conditions de mise en oeuvre industrielle de la nitruration, à propriétés obtenues égales par rapport aux nuances de référence, que la nitruration s'effectue par plasma ou, surtout, par voie gazeuse.

Des applications privilégiées de l'invention sont, notamment :

- pour des produits issus de demi-produits laminés à chaud ou mis en forme à chaud, des arbres de turbine ou des pièces de transmission en général ;
- pour des produits issus de tôles ou bandes laminées à froid, des éléments de courroies de transmission de véhicules ou de machines tournantes telles que des machines-outils, en particulier de courroies pour transmissions automatiques de véhicules automobiles de type CVT.

**Revendications**

1. Acier, **caractérisé en ce que** sa composition est, en pourcentages pondéraux :

   - $10,0\% \leq Ni \leq 24,5\%$;
   - $1,0\% \leq Mo \leq 12,0\%$;
   - $1,0\% \leq Co \leq 25,0\%$ ;
   - $20,0\% \leq Mo + Co + Si + Mn + Cu + W + V + Nb + Zr + Ta + Cr + C \leq 29,0\%$ ;
   - $Co + Mo \geq 20,0\%$ ;
   - $Ni + Co + Mo \geq 29\%$ ;

- traces $\leq$ Al $\leq$ 4,0% ;
- traces $\leq$ Ti $\leq$ 0,1% ;
- traces $\leq$ N $\leq$ 0,0050% ;
- 0,04% $\leq$ Si $\leq$ 2,0% ;
- traces $\leq$ Mn $\leq$ 4,0% ;
- traces $\leq$ C $\leq$ 0,03% ;
- traces $\leq$ S $\leq$ 0,0020% ;
- traces $\leq$ P $\leq$ 0,005% ;
- traces $\leq$ B $\leq$ 0,01 % ;
- traces $\leq$ H $\leq$ 0,0005% ;
- traces $\leq$ O $\leq$ 0,0025% ;
- traces $\leq$ Cu $\leq$ 2,0% ;
- traces $\leq$ W $\leq$ 4,0% ;
- traces $\leq$ Zr $\leq$ 4,0% ;
- traces $\leq$ Ca $\leq$ 0,1% ;
- traces $\leq$ Mg $\leq$ 0,1% ;
- traces $\leq$ Nb $\leq$ 4,0% ;
- traces $\leq$ V $\leq$ 4,0% ;
- traces $\leq$ Ta $\leq$ 4,0% ;

le reste étant du fer et des impuretés résultant de l'élaboration, Cr n'étant présent qu'à l'état de traces résultant de l'élaboration ;
et **en ce que** la population inclusionnaire, observée par analyse d'image sur une surface polie de 650 mm$^2$ si l'acier est sous forme d'une pièce transformée à chaud ou d'une tôle laminée à chaud, et de 800 mm$^2$ si l'acier est sous forme d'une tôle laminée à froid, ne comporte pas d'inclusions non-métalliques de diamètre équivalent supérieur à 10 $\mu$m, et, dans le cas d'une tôle laminée à chaud, ne comporte pas plus de quatre inclusions non-métalliques de diamètre équivalent de 5 à 10 $\mu$m sur 100 mm$^2$, l'observation étant réalisée par analyse d'image sur une surface polie de 650 mm$^2$,
les inclusions non-métalliques étant les oxydes, les sulfures et les nitrures.

2. Acier selon la revendication 1, **caractérisé en ce que** 18,0% $\leq$ Ni + Mo $\leq$ 27,0%.

3. Produit en acier ayant subi une transformation à chaud et ayant été éventuellement traité thermiquement, **caractérisé en ce que** sa composition est, en pourcentages pondéraux :

- 10,0% $\leq$ Ni $\leq$ 24,5% ;
- 1,0% $\leq$ Mo $\leq$ 12,0% ;
- 1,0% $\leq$ Co $\leq$ 25,0% ;
- 20,0% $\leq$ Mo + Co + Si + Mn + Cu + W + V + Nb + Zr + Ta + Cr + C $\leq$ 29,0% ;
- Co + Mo $\geq$ 20,0%
- Ni + Co + Mo $\geq$ 29% ; ;
- traces $\leq$ Al $\leq$ 4,0% ;
- traces $\leq$ Ti $\leq$ 0,1% ;
- traces $\leq$ N $\leq$ 0,0050% ;
- 0,04% $\leq$ Si $\leq$ 2,0% ;
- traces $\leq$ Mn $\leq$ 4,0% ;
- traces $\leq$ C $\leq$ 0,03% ;
- traces $\leq$ S $\leq$ 0,0020% ;
- traces $\leq$ P $\leq$ 0,005% ;
- traces $\leq$ B $\leq$ 0,01 % ;
- traces $\leq$ H $\leq$ 0,0005% ;
- traces $\leq$ O $\leq$ 0,0025% ;
- traces $\leq$ Cu $\leq$ 2,0% ;
- traces $\leq$ W $\leq$ 4,0% ;
- traces $\leq$ Zr $\leq$ 4,0% ;
- traces $\leq$ Ca $\leq$ 0,1% ;
- traces $\leq$ Mg $\leq$ 0,1% ;
- traces $\leq$ Nb $\leq$ 4,0% ;
- traces $\leq$ V $\leq$ 4,0% ;

- traces $\leq$ Ta $\leq$ 4,0% ;
le reste étant du fer et des impuretés résultant de l'élaboration, Cr n'étant présent qu'à l'état de traces résultant de l'élaboration ;
et **en ce que** la population inclusionnaire, observée par analyse d'image sur une surface polie de 650 mm² si l'acier est sous forme d'une pièce transformée à chaud ou d'une tôle laminée à chaud, ne comporte pas d'inclusions non-métalliques de diamètre équivalent supérieur à 10 $\mu$m, et, dans le cas d'une tôle laminée à chaud, ne comporte pas plus de quatre, inclusions non-métalliques de diamètre équivalent de 5 à 10 $\mu$m sur 100 mm², l'observation étant réalisée par analyse d'image sur une surface polie de 650 mm²,
les inclusions non-métalliques étant les oxydes, les sulfures et les nitrures.

4. Produit en acier ayant subi une transformation à chaud et ayant été éventuellement traité thermiquement selon la revendication 3, **caractérisé en ce que** 18,0% $\leq$ Ni + Mo $\leq$ 27,0%.

5. Produit en acier ayant subi une transformation à chaud selon l'une des revendications 3 et 4 et ayant été éventuellement traité thermiquement, **caractérisé en ce qu'**il a une résistance à la traction supérieure ou égale à 1010 MPa, un module d'Young supérieur ou égal à 130 GPa et un allongement réparti supérieur ou égal à 2%.

6. Tôle ou bande laminée à froid, en acier, **caractérisée en ce que** sa composition est, en pourcentages pondéraux :

- 10,0% $\leq$ Ni $\leq$ 24,5% ;
- 1,0% $\leq$ Mo $\leq$ 12,0%;
- 1,0% $\leq$ Co $\leq$ 25,0% ;
- 20,0% $\leq$ Mo + Co + Si + Mn + Cu + W + V + Nb + Zr + Ta + Cr + C $\leq$ 29,0% ;
- Co + Mo $\geq$ 20,0% ;
- Ni + Co + Mo $\geq$ 29% ;
- traces $\leq$ Al $\leq$ 4,0% ;
- traces $\leq$ Ti $\leq$ 0,1% ;
- traces $\leq$ N $\leq$ 0,0050% ;
- 0,04% $\leq$ Si $\leq$ 2,0% ;
- traces $\leq$ Mn $\leq$ 4,0% ;
- traces $\leq$ C $\leq$ 0,03% ;
- traces $\leq$ S $\leq$ 0,0020%,
- traces $\leq$ P $\leq$ 0,005% ;
- traces $\leq$ B $\leq$ 0,01 % ;
- traces $\leq$ H $\leq$ 0,0005% ;
- traces $\leq$ O $\leq$ 0,0025% ;
- traces $\leq$ Cu $\leq$ 2,0% ;
- traces $\leq$ W $\leq$ 4,0% ;
- traces $\leq$ Zr $\leq$ 4,0% ;
- traces $\leq$ Ca $\leq$ 0,1% ;
- traces $\leq$ Mg $\leq$ 0,1% ;
- traces $\leq$ Nb $\leq$ 4,0% ;
- traces $\leq$ V $\leq$ 4,0% ;
- traces $\leq$ Ta $\leq$ 4,0% ;
le reste étant du fer et des impuretés résultant de l'élaboration, Cr n'étant présent qu'à l'état de traces résultant de l'élaboration ;
et **en ce que** la population inclusionnaire, observée par analyse d'image sur une surface polie de 800 mm², ne comporte pas d'inclusions non-métalliques de diamètre équivalent supérieur à 10 $\mu$m,
les inclusions non-métalliques étant les oxydes, les sulfures et les nitrures.

7. Tôle ou bande laminée à froid selon la revendication 6, **caractérisée en ce que** 18,0% $\leq$ Ni + Mo $\leq$ 27,0%.

8. Tôle ou bande laminée à froid selon l'une des revendications 6 et 7, **caractérisée en ce qu'**elle a subi au moins un traitement thermique après le laminage à froid.

9. Tôle ou bande laminée à froid selon la revendication 8, **caractérisée en ce que** ladite tôle ou bande laminée à froid a une résistance à la traction supérieure ou égale à 2270 MPa, une limite élastique conventionnelle supérieure ou égale à 2250 MPa et un allongement réparti supérieur ou égal à 2%.

10. Produit en acier, **caractérisé en ce qu'**il est issu d'un produit selon l'une quelconque des revendications 3 à 5 ou d'une tôle ou bande laminée à froid selon l'une des revendications 6 à 9, éventuellement mise en forme, et **en ce qu'**il a subi un traitement superficiel pour l'amélioration de sa résistance aux sollicitations dynamiques.

11. Produit selon la revendication 10, **caractérisé en ce que** ledit traitement superficiel est choisi parmi une cémentation, une nitruration gazeuse, une nitruration ionique, une carbonitruration, un grenaillage.

12. Arbre de turbine ou pièce de transmission transformée à chaud, **caractérisée en ce que** ledit arbre ou ladite pièce comporte au moins un élément réalisé à partir d'un produit transformé à chaud selon l'une des revendications 3 à 5.

13. Courroie de transmission, **caractérisée en ce qu'**elle comporte au moins un élément réalisé à partir d'une tôle ou bande laminée à froid ou d'un produit selon l'une des revendications 6 à 11.

14. Courroie de transmission selon la revendication 13, **caractérisée en ce qu'**il s'agit d'une courroie de transmission de type CVT pour véhicule automobile.

15. Produit en acier ayant subi une transformation à chaud et ayant été éventuellement traité thermiquement selon l'une des revendications 3 à 5, ou tôle ou bande laminée à froid et éventuellement traitée thermiquement selon l'une des revendications 6 à 9, **caractérisé en ce que** la taille de grain du produit ou de la tôle ou bande est de 8 ASTM ou plus fin.

**Patentansprüche**

1. Stahl, **dadurch gekennzeichnet, dass** seine Zusammensetzung in Gewichtsprozenten wie folgt ist:

- $10,0\ \% \leq Ni \leq 24,5\ \%$;
- $1,0\ \% \leq Mo \leq 12,0\%$;
- $1,0\ \% \leq Co \leq 25,0\%$;
- $20,0\ \% \leq Mo + Co + Si + Mn + Cu + W + V + Nb + Zr + Ta + Cr + C \leq 29,0\ \%$;
- $Co + Mo \geq 20,0\ \%$;
- $Ni + Co + Mo \geq 29\ \%$;
- $Spuren \leq Al \leq 4,0\ \%$;
- $Spuren \leq Ti \leq 0,1\ \%$;
- $Spuren \leq N \leq 0,0050\ \%$;
- $0,04\ \% \leq Si \leq 2,0\ \%$;
- $Spuren \leq Mn \leq 4,0\ \%$;
- $Spuren \leq C \leq 0,03\ \%$;
- $Spuren \leq S \leq 0,0020\ \%$;
- $Spuren \leq P \leq 0,005\ \%$;
- $Spuren \leq B \leq 0,01\ \%$;
- $Spuren \leq H \leq 0,0005\ \%$;
- $Spuren \leq O \leq 0,0025\ \%$;
- $Spuren \leq Cu \leq 2,0\ \%$;
- $Spuren \leq W \leq 4,0\ \%$;
- $Spuren \leq Zr \leq 4,0\ \%$;
- $Spuren \leq Ca \leq 0,1\ \%$;
- $Spuren \leq Mg \leq 0,1\ \%$;
- $Spuren \leq Nb \leq 4,0\ \%$;
- $Spuren \leq V \leq 4,0\ \%$;
- $Spuren \leq Ta \leq 4,0\ \%$;
der Rest besteht aus Eisen und erschmelzungsbedingten Verunreinigungen, wobei Cr nur in erschmelzungsbedingten Spuren vorhanden ist;
und die Einschlusspopulation wird durch Bildanalyse auf einer polierten Oberfläche von 650 mm$^2$ beobachtet, wenn der Stahl in Form eines warm umgeformten Teils oder eines warm gewalzten Blechs vorliegt, und von 800 mm$^2$, wenn der Stahl in Form eines kaltgewalzten Blechs vorliegt, keine nichtmetallischen Einschlüsse mit einem äquivalenten Durchmesser von mehr als 10 μm vorhanden sind, und bei warmgewalzten Blechen dürfen nicht mehr als vier nicht-metallische Einschlüsse mit einem äquivalenten Durchmesser von 5 bis 10 μm auf

100 mm² vorhanden sein, wobei die Beobachtung durch Bildanalyse auf einer polierten Oberfläche von 650 mm² erfolgt,
nichtmetallische Einschlüsse sind Oxide, Sulfide und Nitride.

2. Stahl nach Anspruch 1, **dadurch gekennzeichnet, dass** 18,0 % ≤ Ni + Mo ≤ 27,0%.

3. Erzeugnis aus Stahl, das einer Warmumformung unterzogen und gegebenenfalls wärmebehandelt wurde, **dadurch gekennzeichnet, dass** seine Zusammensetzung in Gewichtsprozent besteht aus:

- 10,0 % ≤ Ni ≤ 24,5%;
- 1,0 ≤ Mo ≤ 12,0%;
- 1,0 % ≤ Co ≤25,0%;
- 20,0 % ≤ Mo + Co + Si + Mn + Cu + W + V + Nb + Zr + Ta + Cr + C ≤ 29,0 %;
- Co + Mo ≥ 20,0 %
- Ni + Co + Mo ≥ 29 %;
- Spuren ≤ Al ≤ 4,0 %;
- Spuren ≤ Ti ≤ 0,1 %;
- Spuren ≤ N ≤ 0,0050 %;
- 0,04 % ≤ Si ≤ 2,0 %;
- Spuren ≤ Mn ≤ 4,0 %;
- Spuren ≤ C ≤ 0,03 %;
- Spuren ≤ S ≤ 0,0020 %;
- Spuren ≤ P ≤ 0,005 %;
- Spuren ≤ B ≤ 0,01 %;
- Spuren ≤ H ≤ 0,0005 %;
- Spuren ≤ O ≤ 0,0025 %;
- Spuren ≤ Cu ≤ 2,0 %;
- Spuren ≤ W ≤ 4,0 %;
- Spuren ≤ Zr ≤ 4,0 %;
- Spuren ≤ Ca ≤ 0,1 %;
- Spuren ≤ Mg ≤ 0,1 %;
- Spuren ≤ Nb ≤ 4,0 %;
- Spuren ≤ V ≤ 4,0 %;
- Spuren ≤ Ta ≤ 4,0 %;

der Rest besteht aus Eisen und erschmelzungsbedingten Verunreinigungen, wobei Cr nur in erschmelzungsbedingten Spuren vorhanden ist;
und dass die Einschlusspopulation, die durch Bildanalyse auf einer polierten Fläche von 650 mm² beobachtet wird, wenn der Stahl in Form eines warm umgeformten Stücks oder eines warm gewalzten Blechs vorliegt, keine nichtmetallischen Einschlüsse mit einem äquivalenten Durchmesser von mehr als 10 μm aufweist, und bei einem warm gewalzten Blech nicht mehr als vier nichtmetallische Einschlüsse mit einem Äquivalentdurchmesser von 5 bis 10 μm auf 100 mm² aufweist, wobei die Beobachtung durch Bildanalyse auf einer polierten Fläche von 650 mm² erfolgt,
nichtmetallische Einschlüsse sind Oxide, Sulfide und Nitride.

4. Warmumgeformtes und gegebenenfalls wärmebehandeltes Stahlprodukt nach Anspruch 3, **dadurch gekennzeichnet, dass** 18,0 % ≤ Ni + Mo ≤ 27,0 %.

5. Stahlerzeugnis, das einer Warmumformung nach einem der Ansprüche 3 oder 4 unterzogen und gegebenenfalls wärmebehandelt wurde, **dadurch gekennzeichnet, dass** es eine Zugfestigkeit größer oder gleich 1010 MPa, ein Young-Modul größer oder gleich 130 GPa und eine verteilte Dehnung größer oder gleich 2 % aufweist.

6. Kaltgewalztes Blech oder Band aus Stahl, **dadurch gekennzeichnet, dass** seine Zusammensetzung in Gewichtsprozenten besteht aus:

- 10,0 % ≤ Ni ≤ 24,5%;
- 1,0 % ≤ Mo ≤ 12,0%;
- 1,0 % ≤ Co ≤25,0%;
- 20,0 % ≤ Mo + Co + Si + Mn + Cu + W + V + Nb + Zr + Ta + Cr + C ≤ 29,0 %;

- Co + Mo ≥ 20,0 %;
- Ni + Co + Mo ≥ 29 %;
- Spuren ≤ Al ≤ 4,0 %;
- Spuren ≤ Ti ≤ 0,1 %;
- Spuren ≤ N ≤ 0,0050 %;
- 0,04 % ≤ Si ≤ 2,0 %;
- Spuren ≤ Mn ≤ 4,0 %;
- Spuren ≤ C ≤ 0,03 %;
- Spuren ≤ S ≤ 0,0020 %;
- Spuren ≤ P ≤ 0,005 %;
- Spuren ≤ B ≤ 0,01 %;
- Spuren ≤ H ≤ 0,0005 %;
- Spuren ≤ O ≤ 0,0025 %;
- Spuren ≤ Cu ≤ 2,0 %;
- Spuren ≤ W ≤ 4,0 %;
- Spuren ≤ Zr ≤ 4,0 %;
- Spuren ≤ Ca ≤ 0,1 %;
- Spuren ≤ Mg ≤ 0,1 %;
- Spuren ≤ Nb ≤ 4,0 %;
- Spuren ≤ V ≤ 4,0 %;
- Spuren ≤ Ta ≤ 4,0 %;

der Rest besteht aus Eisen und erschmelzungsbedingten Verunreinigungen, wobei Cr nur in erschmelzungsbedingten Spuren vorhanden ist;

und die Einschlusspopulation, die durch Bildanalyse auf einer polierten Oberfläche von 800 $mm^2$ beobachtet wurde, weist keine nichtmetallischen Einschlüsse mit einem äquivalenten Durchmesser von mehr als 10 μm auf, nichtmetallische Einschlüsse sind Oxide, Sulfide und Nitride.

7. Kaltgewalztes Blech oder Band nach Anspruch 6, **dadurch gekennzeichnet, dass** 18,0 % ≤ Ni + Mo ≤ 27,0 %.

8. Kaltgewalztes Blech oder Band nach einem der Ansprüche 6 und 7, **dadurch gekennzeichnet, dass** es nach dem Kaltwalzen mindestens einer Wärmebehandlung unterzogen wurde.

9. Kaltgewalztes Blech oder Band nach Anspruch 8, **dadurch gekennzeichnet, dass** das kaltgewalzte Blech oder Band eine Zugfestigkeit von 2270 MPa oder mehr aufweist, eine konventionelle Streckgrenze von 2250 MPa oder mehr und eine verteilte Dehnung von 2 % oder mehr aufweist.

10. Stahlprodukt, **dadurch gekennzeichnet, dass** es aus einem Produkt nach einem der Ansprüche 3 bis 5 oder aus einem kaltgewalzten Blech oder Band nach einem der Ansprüche 6 bis 9 stammt, das gegebenenfalls geformt wurde, und dass es einer Oberflächenbehandlung zur Verbesserung seiner Widerstandsfähigkeit gegenüber dynamischen Belastungen unterzogen wurde.

11. Produkt nach Anspruch 10, **dadurch gekennzeichnet, dass** die Oberflächenbehandlung ausgewählt ist aus Aufkohlung, Gasnitrierung, Ionennitrierung, Carbonitrierung, Kugelstrahlen.

12. Warmumgeformte Turbinenwelle oder Getriebeteil, **dadurch gekennzeichnet, dass** die Welle oder das Teil mindestens ein Element enthält, das aus einem warmumgeformten Produkt nach einem der Ansprüche 3 bis 5 hergestellt ist.

13. Treibriemen, **dadurch gekennzeichnet, dass** er mindestens ein Element aufweist, das aus einem kaltgewalzten Blech oder Band oder aus einem Produkt nach einem der Ansprüche 6 bis 11 hergestellt ist.

14. Treibriemen nach Anspruch 13, **dadurch gekennzeichnet, dass** es sich um einen Treibriemen vom Typ CVT für Kraftfahrzeuge handelt.

15. Warmumgeformtes und gegebenenfalls wärmebehandeltes Stahlprodukt nach einem der Ansprüche 3 bis 5 oder kaltgewalztes Blech oder Band und gegebenenfalls wärmebehandelt nach einem der Ansprüche 6 bis 9, **dadurch gekennzeichnet, dass** die Korngröße des Produkts oder des Blechs oder Bands 8 ASTM oder feiner ist.

**Claims**

1.  Steel, **characterised in that** its composition, in percentages by weight is as follows:

    - $10.0\% \leq Ni \leq 24.5\%$;
    - $1.0\% \leq Mo \leq 12.0\%$;
    - $1.0\% \leq Co \leq 25.0\%$;
    - $20.0\% \leq Mo + Co + Si + Mn + Cu + W + V + Nb + Zr + Ta + Cr + C \leq 29.0\%$;
    - $Co + Mo \geq 20.0\%$;;
    - $Ni + Co + Mo \geq 29\%$;
    - $traces \leq Al \leq 4.0\%$;
    - $traces \leq Ti \leq 0.1\%$;
    - $traces \leq N \leq 0.0050\%$;
    - $0.04\% \leq Si \leq 2.0\%$;
    - $traces \leq Mn \leq 4.0\%$;
    - $traces \leq C \leq 0.03\%$;
    - $traces \leq S \leq 0.0020\%$;
    - $traces \leq P \leq 0.005\%$;
    - $traces \leq B \leq 0.01\%$;
    - $traces \leq H \leq 0.0005\%$;
    - $traces \leq O \leq 0.0025\%$;
    - $traces \leq Cu \leq 2.0\%$;
    - $traces \leq W \leq 4.0\%$;
    - $traces \leq Zr \leq 4.0\%$;
    - $traces \leq Ca \leq 0.1\%$;
    - $traces \leq Mg \leq 0.1\%$;
    - $traces \leq Nb \leq 4.0\%$;
    - $traces \leq V \leq 4.0\%$;
    - $traces \leq Ta \leq 4.0\%$;

    with the remainder being iron and impurities resulting from the smelting and manufacturing process, Cr being present only in trace amounts resulting from the smelting and manufacturing process;
    and **in that** the inclusion population, as observed by means of image analysis over a polished surface measuring 650 mm$^2$ if the steel is in the form of a component part/work piece that is hot-formed or a hot-rolled sheet; and measuring 800 mm$^2$ if the steel is in the form of a cold-rolled sheet, does not contain non-metallic inclusions having equivalent diameter greater than 10 $\mu$m, and, in the case of a hot-rolled sheet, does not contain more than four non-metallic inclusions having equivalent diameter of 5 $\mu$m to 10 $\mu$m over 100 mm$^2$, the observation being performed by means of image analysis over a polished surface measuring 650 mm$^2$, the non-metallic inclusions being oxides, sulfides and nitrides.

2.  - Steel according to claim 1, **characterised in that** $18.0\% \leq Ni + Mo \leq 27.0\%$.

3.  A product made of steel that has been subjected to a heat forming process and that has possibly been heat-treated, **characterised in that** the composition thereof, in percentages by weight is as follows:

    - $10.0\% \leq Ni \leq 24.5\%$;
    - $1.0\% \leq Mo \leq 12.0\%$;
    - $1.0\% \leq Co \leq 25.0\%$;
    - $20.0\% \leq Mo + Co + Si + Mn + Cu + W + V + Nb + Zr + Ta + Cr + C \leq 29.0\%$ ;
    - $Co + Mo \geq 20.0\%$;
    - $Ni + Co + Mo \geq 29\%$;
    - $traces \leq Al \leq 4.0\%$,
    - $traces \leq Ti \leq 0.1\%$;
    - $traces \leq N \leq 0.0050\%$;
    - $0.04\% \leq Si \leq 2.0\%$;
    - $traces \leq Mn \leq 4.0\%$;
    - $traces \leq C \leq 0.03\%$;
    - $traces \leq S \leq 0.0020\%$;
    - $traces \leq P \leq 0.005\%$;

- traces $\leq$ B $\leq$ 0.01%;
- traces $\leq$ H $\leq$ 0.0005%;
- traces $\leq$ O $\leq$ 0.0025%;
- traces $\leq$ Cu $\leq$ 2.0%;
- traces $\leq$ W $\leq$ 4.0%;
- traces $\leq$ Zr $\leq$ 4.0%;
- traces $\leq$ Ca $\leq$ 0.1%;
- traces $\leq$ Mg $\leq$ 0.1%;
- traces $\leq$ Nb $\leq$ 4.0%;
- traces $\leq$ V $\leq$ 4.0%;
- traces $\leq$ Ta $\leq$ 4.0%;

with the remainder being iron and impurities resulting from the smelting and manufacturing process, Cr being present only in trace amounts resulting from the smelting and manufacturing process;

and **in that** the inclusion population, as observed by means of image analysis over a polished surface measuring 650 mm$^2$ if the steel is in the form of a component part/work piece that is hot-formed or a hot-rolled sheet, does not contain non-metallic inclusions having equivalent diameter greater than 10 $\mu$m, and, in the case of a hot-rolled sheet, does not contain more than four non-metallic inclusions having equivalent diameter of 5 $\mu$m to 10 $\mu$m over 100 mm$^2$, the observation being performed by means of image analysis over a polished surface measuring 650 mm$^2$,

the non-metallic inclusions being oxides, sulfides and nitrides.

4. A product made of steel that has been subjected to a heat forming process and that has possibly been heat-treated according to claim 3, **characterised in that** 18.0% $\leq$ Ni + Mo $\leq$ 27.0%.

5. - A product made of steel that has been subjected to a heat forming process according to one of claims 3 or 4 and that has possibly been heat-treated, **characterised in that** it has a tensile strength that is greater than or equal to 1010 MPa, a Young's modulus greater than or equal to 130 GPa, and a uniform elongation greater than or equal to 2%.

6. - A cold-rolled sheet or strip, made from steel, **characterised in that** the composition thereof, in percentages by weight is as follows:

- 10.0% $\leq$ Ni $\leq$ 24.5%;
- 1.0% $\leq$ Mo $\leq$ 12.0%;
- 1.0% $\leq$ Co $\leq$ 25.0%;
- 20.0% $\leq$ Mo + Co + Si + Mn + Cu + W + V + Nb + Zr + Ta + Cr + C $\leq$ 29.0%;
- Co + Mo $\geq$ 20.0%;
- Ni + Co + Mo $\geq$ 29%;
- traces $\leq$ Al $\leq$ 4.0%;
- traces $\leq$ Ti $\leq$ 0.1%;
- traces $\leq$ N $\leq$ 0.0050%;
- 0.04% $\leq$ Si $\leq$ 2.0%;
- traces $\leq$ Mn $\leq$ 4.0%;
- traces $\leq$ C $\leq$ 0.03%;
- traces $\leq$ S $\leq$ 0.0020%%;
- traces $\leq$ P $\leq$ 0.005%;
- traces $\leq$ B $\leq$ 0.01%;
- traces $\leq$ H $\leq$ 0.0005%;
- traces $\leq$ O $\leq$ 0.0025%;
- traces $\leq$ Cu $\leq$ 2.0%;
- traces $\leq$ W $\leq$ 4.0%;
- traces $\leq$ Zr $\leq$ 4.0%;
- traces $\leq$ Ca $\leq$ 0.1%;
- traces $\leq$ Mg $\leq$ 0.1%;
- traces $\leq$ Nb $\leq$ 4.0%;
- traces $\leq$ V $\leq$ 4.0%;
- traces $\leq$ Ta $\leq$ 4.0%;

with the remainder being iron and impurities resulting from the smelting and manufacturing process, Cr being present only in trace amounts resulting from the smelting and manufacturing process;

and **in that** the inclusion population, as observed by means of image analysis over a polished surface measuring 800 mm$^2$, does not contain non-metallic inclusions having equivalent diameter greater than 10 $\mu$m, the non-metallic inclusions being oxides, sulfides and nitrides.

7. - A cold-rolled sheet or strip according to claim 6, **characterised in that** $18.0\% \leq Ni + Mo \leq 27.0\%$.

8. - A cold-rolled sheet or strip according to one of claims 6 or 7, **characterised in that** it has been subjected to at least one heat treatment process after cold rolling.

9. - A hot-rolled or cold-rolled sheet or strip according to one of claims 6 to 8, **characterised in that** the said sheet or strip that has been cold-rolled has a tensile strength that is greater than or equal to 2270 MPa, a yield strength greater than or equal to 2250 MPa, and a uniform elongation greater than or equal to 2%.

10. A product made of steel, **characterised in that** it is derived from a product according to any one of claims 3 to 5 or from a cold-rolled sheet or strip according to one of claims 6 to 9, possibly subjected to forming, and **in that** it has been possibly subjected to a surface treatment process for improving its resistance to dynamic loads.

11. - A product according to claim 10, **characterised in that** the said surface treatment may be selected from among the processes of: carburising, gas nitriding, ion nitriding, carbonitriding, shot peening.

12. - A turbine shaft or a transmission component part that is hot-formed, **characterised in that** the said shaft or the said component part comprises at least one element that is made from a hot-formed product according to one of claims 3 to 5.

13. - A transmission belt, **characterised in that** it comprises at least one element that is made from a cold-rolled sheet or strip or from a product of the foregoing type according to one of claims 6 to 11.

14. - A transmission belt according to claim 13, **characterised in that** it is a CVT-type transmission belt for a motor vehicle.

15. - A product made of steel that has been subjected to a heat forming process and possibly having been heat-treated according to one of claims 3 to 5, or a sheet or strip that has been cold-rolled and possibly heat-treated according to one of claims 6 to 9, **characterised in that** the grain size of the product or of the sheet or strip is ASTM 8 or finer.

FIG.1

<u>FIG.2</u>

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1339880 B1
- EP 2180073 B1
- WO 0240722 A1
- JP 2008088540 A
- JP 2007186780 A